**Europäisches Patentamt**

**European Patent Office**

**Office européen des brevets**

(19)

(11) Numéro de publication: **0 038 747**
**B1**

(12) **FASCICULE DE BREVET EUROPEEN**

(45) Date de publication du fascicule du brevet: **19.10.83**

(51) Int. Cl.³: **F 16 H 9/06, B 27 C 9/04**

(21) Numéro de dépôt: **81400590.6**

(22) Date de dépôt: **14.04.81**

(54) Dispositif d'entraînement sélectif à courroies, notamment pour machine à bois à plusieurs fonctions.

(30) Priorité: **21.04.80 FR 8008892**

(43) Date de publication de la demande:
**28.10.81 Bulletin 81/43**

(45) Mention de la délivrance du brevet:
**19.10.83 Bulletin 83/42**

(84) Etats contractants désignés:
**AT BE CH DE FR GB IT LI LU NL SE**

(56) Documents cités:
**FR - A - 1 037 006**
**GB - A - 127 516**
**US - A - 1 608 696**

(73) Titulaire: **LUREM S.A. Société dite**
**F-61700 Domfront (FR)**

(72) Inventeur: **Grosjean, Gérard**
**Rue de la Longerais**
**61700 Domfront (FR)**

(74) Mandataire: **Bressand, Georges et al,**
**c/o CABINET LAVOIX 2 Place d'Estienne d'Orves**
**F-75441 Paris Cedex 09 (FR)**

Courier Press, Leamington Spa, England.

## Dispositif d'entraînement sélectif à courroies, notamment pour machine à bois à plusieurs fonctions

La présente invention concerne les dispositifs d'entraînement à courroies utilisés notamment bien que non exclusivement sur des machines à bois à plusieurs fonctions dites "combinées". A titre d'exemple, les diverses fonctions qui peuvent être ainsi remplies sont les suivants: raboteuse-dégauchisseuse, scie, toupie.

On sait qu'il est souhaitable, afin d'en abaisser le prix, d'utiliser un seul moteur pour entraîner les divers outils que comporte une telle machine.

Une solution rustique consiste à réaliser l'entraînement de chaque outil au moyen d'une transmission à poulies et courroies, l'entraînement sélectif de l'un des outils étant obtenu simplement en mettant en place manuellement la courroie de telle façon qu'elle entraîne la poulie associée à l'outil choisi. Un tel agencemenet est certes d'un prix de revient relativement faible mais offre des inconvénients évidents: la mise en place des courroies est peu commode car l'accès n'est pas toujours très facile. Par ailleurs, le passage d'un outil à un autre nécessite un temps relativement important. Enfin, il est toujours dangereux pour l'utilisateur d'être obligé d'accéder à l'intérieur de la machine qui peut être mise en route par inadvertance, alors que l'on procède à un changement de courroie.

Dans une autre solution connue, il est prévu sur un même arbre moteur plusieurs poulies qui sont normalement montées folles sur cet arbre et qui peuvent en être rendues solidaires en rotation, sélectivement, par clavetage. Cette solution présente également des inconvénients parmi lesquels on citera les suivants:

— il est nécessaire d'attendre l'arrêt complet de l'arbre moteur pour pouvoir faire la sélection et réaliser l'accouplement entre l'arbre et l'une des poulies;

— l'engagement d'une clavette ne peut s'effectuer que se l'arbre occupe une position angulaire determinée, qui en général n'est pas celle qu'il tend à occuper lorsqu'il s'arrête;

— cette solution n'est pas très fiable car en cas de fausse manoeuvre et en particulier d'engagement prématuré de la clavette, le dispositif risque d'être endommagé;

— il se produit en général un entraînement des poulies qui ne sont pas clavetées sur l'arbre moteur, du fait de l'existence d'un couple résiduel. Les outils correspondants sont alors entraînés, bien qu'à faible vitesse, ce qui présente un inconvénient au plan de la sécurité.

On connaît enfin, d'après le brevet FR—A— 1 037 006, un dispositif d'embrayage permettant de réaliser l'entraînement de l'une ou l'autre de deux courroies à pairtir de dux poulies motrices calées sur le même arbre, l'un ou l'autre de deux galets tendeurs étant amené successivement en contact avec l'une ou l'autre des deux courroies précitées.

Ce dispositif présente cependant des inconvénients:

— tout d'abord il ne permet d'entraîner que deux courroies et ne peut être adapté pour l'entraînement d'un nombre supérieur d'accessoires.

— de plus, il nécessite l'utilisation de deux galets, un pour chaque courroie et ne présente pas toutes les garanties au plan de la sécurité.

Le but de cette invention est par conséquent de proposer un dispositif d'entraînement sélectif d'au moins deux organes menés, à partir d'un moteur unique, qui n'offre pas les inconvénients des trois solutions évoquées ci-dessus et qui, en particulier, soit de construction et d'utilisation particulièrement simples et offre toute garantie quant à la sécurité et à la fiabilité.

Elle a donc pour objet un dispositif d'entraînement sélectif d'au moins deux organes menés, à partir d'un moteur unique, du type comprenant au moins deux poulies motrices solidaires en rotation d'un arbre moteur et reliées par des courroies à des poulies menées associées, respectivement, à chacun des organes menés, les courroies ayant à l'état libre une longueur et une tension telles qu'elles ne réalisent pas l'entraînement des poulies menées, et des moyens pouvant entre amenés sélectivement, par rapport aux diverses courroies, dans plusieurs positions dans lesquelles ils donnent à une courroie choisie une tension suffisante pour réaliser l'entraînement de l'organe mené associé, caractérisé en ce que lesdits moyens comprennent un galet tendeur porté par un support monté coulissant et oscillant sur une tige de guidage fixe parallèle à l'arbre moteur.

Suivant d'autres caractéristiques:

— le support est relié à un levier d'actionnement ou de sélection guidé dans une grille de sélection;

— la grille de sélection comprend autant de branches que de courroies avec lesquelles le galet tendeur peut coopérer, cette grille ayant par exemple la forme générale d'un M dont les trois branches verticales correspondent, respectivement, à une position active du tendeur;

— il comprend un arbre intermédiaire fixe, parallèle à l'arbre moteur et sur lequel est montée folle au moins une poulie de guidage d'au moins une courroie, et/ou au moins un couple depoulies de renvoi du mouvement vers l'un des organes à entraîner;

— un bras de support de l'un des organes à entraîner est monté sur l'arbre intermédiaire de façon à pouvoir être positionné angulairement par rapport à cet arbre.

L'invention a également pour objet une machine combinée, notamment une machine à bois, équipée d'un tel dispositif.

L'invention va être decrite plus en détail ci-dessous dans son application à une machine combinée ou multifonctions, en se référant aux dessins annexés sur lesquels:

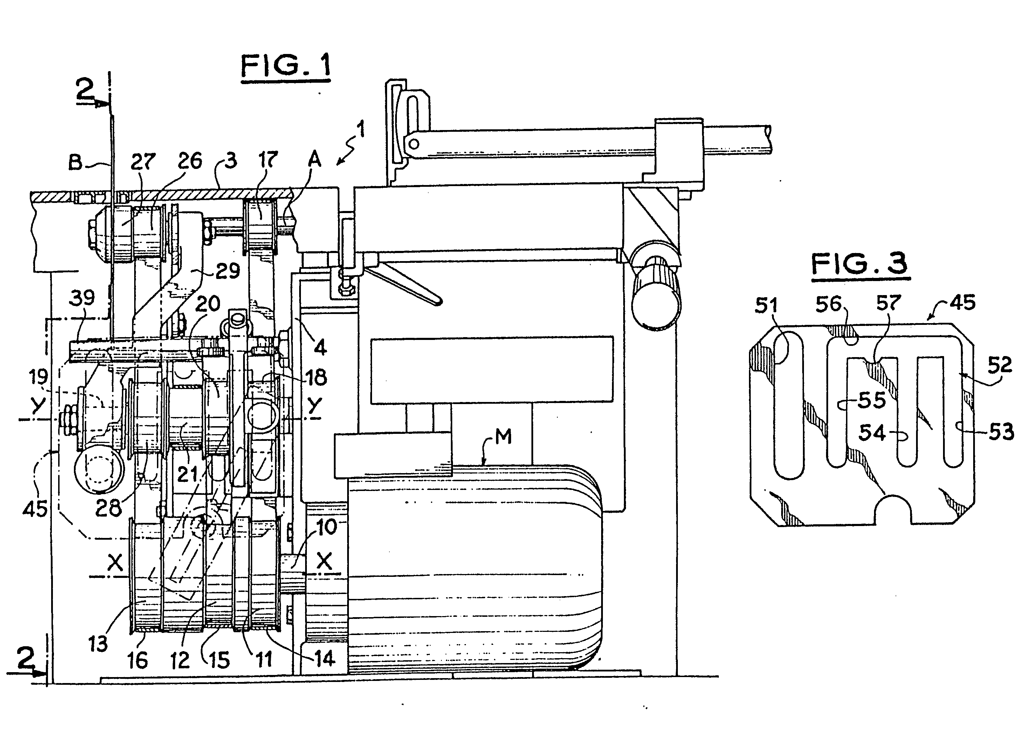

— la Fig. 1 est une vue en élévation avec arrachement d'une machine équipée suivant l'invention;

— la Fig. 2 est une vue en élévation látérale, en partie en coupe, suivant la ligne 2—2 de la Fig. 1;

— la Fig. 3 est une vue montrant la grille de sélection utilisée sur cette machine.

La machine à laquelle l'invention est appliquée est une machine à bois combinée qui remplit les fonctions suivantes: raboteuses-dégauchisseuse, scie, toupie. Ces fonctions sont dans l'ensemble bien connues et l'on se bornera par conséquent à décrire ici les points qui sont plus particulièrement originaux.

La machine comprend un bâti désigné dans son ensemble par la référence 1 et qui comporte en particulier une face frontale 2 et un plateau supérieur 3. Ce bâti comprend également une paroi intermédiaire 4 perpendiculaire à la paroi frontale.

Les trois organes menés sont constitués par un arbre de raboteuse-dégauchisseuse A, une scie circulaire B et une toupie C. Le dispositif d'entraînement et de transmission comprend un moteur unique M dont l'arbre de sortie 10, d'axe X—X porte trois poulies 11, 12, 13 avec lesquelles coopèrent trois courroies 14, 15, 16. La première 14 de ces courroies sert à entraîner une poulie 17 solidaire en rotation de l'arbre A de la raboteuse, en etant guidée par une poulie intermédiaire 18 montée folle sur un arbre fixe 19 monté en porte-à-faux sur la paroi 4 et d'axe Y—Y parallèle à l'axe X—X du moteur.

La deuxième courroie 15 assure la liaison entre la poulie 12 et une deuxième poulie intermédiaire 20 montée folle sur l'arbre fixe 19. Cette poulie 20 est solidaire d'une poulie 21 qui, par l'intermédiaire d'une courroie 22 réalise l'entraînement de l'arbre C de la toupie dont l'axe Z—Z est orthogonal aux axes X—X et Y—Y. La courroie 22 suit donc un trajet croisé et elle est tendue par un galet 23 monté à l'extrémité d'un bras 24 et sollicité par un ressort 25.

Enfin, la troisième courroie 16 relie la poulie 13 à une poulie 26 solidaire du moyeu 27 portant la scie circulaire et dont l'axe est parallèle à l'axe X—X. Cette courroie 16 est également guidée par une poulie intermédiaire 28 montée folle sur l'arbre 19.

La scie et sa poulie d'entraînement sont portées à l'extrémité d'un bras coudé 29 monté oscillant autour de l'arbre 19 et dont la position angulaire par rapport à cet arbre peut être réglée au moyen d'un levier 30 terminé par une poignée 31. Cette dernière est utilisée, d'une part, pour modifier la position angulaire du bras par rapport à son support et d'autre part, pour serrer ou desserrer un collier 32 de blocage de ce bras par rapport à ce même support au moyen d'une liaison par filetage.

Un protecteur de lame 33 est porté par un support 34 formant un parallélogramme articulé avec le bras 29 et un deuxième bras 35 articulé autour d'un axe fixe 36.

Le dispositif permettant de sélectionner l'entraînement de l'un des trois outils de cette machine comprend principalement un galet tendeur 37 porté par un bras 38 de forme curviligne guidé le long d'une tige 39 d'axe parallèle aux axes X—X de l'arbre moteur 10 et de Y—Y de l'arbre intermédiaire 19. Le guidage de ce bras par rapport à la tige 39 est réalisé dans l'exemple choisi au moyen de deux paires de galets inférieurs 40 et d'un galet supérieur 41 dont la position peut être réglée au moyen d'un excentrique 42.

Le bras 33 est solidaire d'un levier de manoeuvre 43 terminé par une poignée 44 et guidé dans une grille 45 disposée dans la paroi frontale 2. Le levier de manoeuvre 43 est relié par une articulation à rotule 46 à une biellette de guidage 47 elle-même montée oscillante et coulissante par rapport à un axe 48 perpendiculaire à la paroi frontale 2. La biellette 47 peut être bloquée en position au moyen d'un mécanisme très simple, du type à vis et écrou actionné par une poignée 49. Un ressort de traction 50, facultatif, assure le rappel vers le bas, de l'ensemble formé par le galet 37, le bras 38 et le levier 43.

Comme on peut le voir sur la Fig. 3, la grille 45 assure simultanément le guidage du levier 30 de positionnement du bras porte-scie et celui du levier 43 agissant sur le galet tendeur 37. Cette grille comporte à cet effet une première fente verticale 51 dans laquelle se déplace le levier 30 et une deuxième découpe 52 présentant la forme générale d'un M et dont chacune des branches verticales 53, 54, 55 correspond à une position active du galet tendeur 37, la branche horizontale 56 de cette découpe permettant au levier 43 de passer d'une position active à une autre. Les branches 53, 54, 55 sont donc situées dans l'alignement des courroies 14, 15, 16. Entre les deux branches 54, 55, la branche horizontale 56 comporte dans son bord inférieur une échancrure 57 qui détermine une position de repos ou position neutre pour le galet tendeur et son levier de commande.

Il est prévu enfin un micro-interrupteur 58 placé dans le circuit d'alimentation du moteur et dont la position est telle qu'il est ouvert dès que le galet tendeur quitte l'une de ses positions actives. C'est ainsi que l'on peut prévoir à l'extrémité de l'axe 48 une came (non représentée), qui commande le micro-interrupteur lorsque la manette 49 est actionnée pour débloquer le galet tendeur.

Le fonctionnement du dispositif que l'on vient de décrire est le suivant: en position neutre, le levier 43 commandant la position du galet tendeur occupe une position dans laquelle il est en appui dans l'échancrure 57. Dans cette position le galet tendeur se trouve dégagé des diverses courroies et le micro-interrupteur 58 est ouvert, de sorte qu'aucun outil ne peut être entraîné. Si l'utilisateur souhaite entraîner l'un des trois outils de la machine, il déverrouille la biellette de guidage 47 au moyen de la poignée 49 et amène le levier de sélection 43 en face de celle des branches de la grille 45 qui correspond à l'outil choisi. Ce déplacement s'effectue par coulissement du bras 38 le long de la tige de guidage 39. Puis le levier 43 est abaissé dans la branche choisie de façon à amener le galet tendeur 37 en prise avec la courroie sélectionnée. L'utilisateur verrouille alors la biellette 47 de guidage du levier et la machine peut être utilisée dans cette configuration aussi longtemps qu'on le désire. Simultanément, le micro-interrupteur 58 a été fermé, ce qui permet d'alimenter le moteur.

Pour réaliser l'entraînement d'un autre outil, il suffit de déverrouiller le levier de sélection et de l'amener dans la position correspondant au nouvel outil choisi.

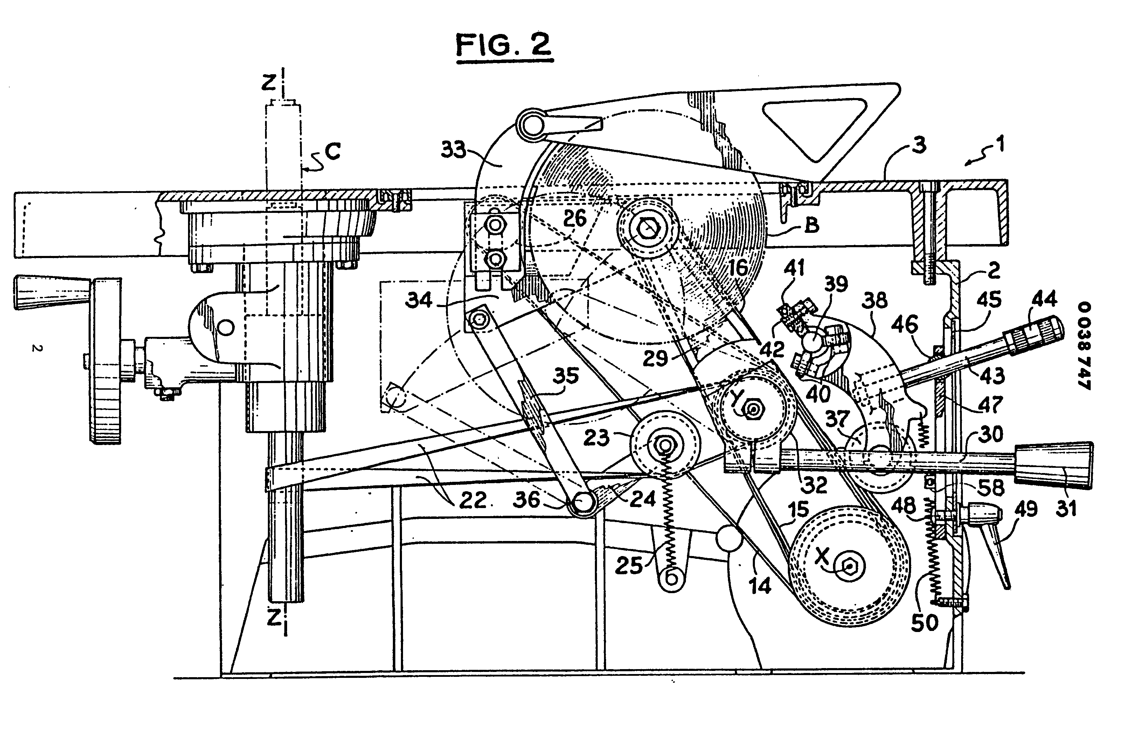

On remarquera également que l'arbre intermédiaire 19 remplit plusieurs fonctions:
— il porte des poulies 18, 28 de guidage des diverses courroies;
— il assure au moyen de deux poulies 20, 21 le renvoi de mouvement vers la toupie;
— il sert également d'axe d'oscillation pour le bras porte-scie 29 et à cet égard, on peut noter que, compte tenu des positions respectives des axes X—X, Y—Y et de l'axe de la scie B, les traces de ces trois axes sur le plan vertical correspondant à la Fig. 2, étant à peu près alignées, la variation de la longueur de courroie qui doit être rattrapée entre les deux positions extrêmes du bras de scie est relativement faible, et peut en tout état de cause être compensée par la position du galet tendeur. Cette disposition est donc particulièrement avantageuse.

D'un façon générale, le dispositif qu'on vient de décrire offre bien par rapport aux dispositifs antérieurs les avantages recherchés. En effet: il est de construction et de manoeuvre particulièrement simples puisque la sélection de l'entraînement d'un outil déterminé est réalisée au moyen d'un levier unique accessible de l'extérieur de la machine et qui agit sur un simple galet tendeur.

Il est d'un prix de revient raisonnable, étant donné les moyens simples mis en jeu.

Il est d'un fonctionnement parfaitement fiable et en particulier aucune fausse manoeuvre ne peut être réalisée puiqu'aucune liaison positive n'est réalisée entre les divers éléments de la transmission.

La sécurité de l'utilisateur est également totale puisqu'il n'a pas à accéder à l'intérieur de la machine pour effectuer des manipulations de courroies ou analogues.

## Revendications

1. Dispositif d'entraînement sélectif d'au moins deux organes menés, à partir d'un moteur unique, du type comprenant au moins deux poulies motrices (11, 12, 13) solidaires en rotation d'un arbre moteur (10) et reliées par des courroies (14, 15, 16) à des poulies menées (17, 20, 26) associées, respectivement, à chacun des organes menés, les courroies (14, 15, 16) ayant à l'état libre une longueur et une tension telles qu'elles ne réalisent pas l'entraînement des poulies menées (17, 20, 26), et des moyens (37) pouvant être amenés sélectivement, par rapport aux diverses courroies, dans plusieurs positions dans lesquelles ils donnent à une courroie choisi une tension suffisante pour réaliser l'entraînement de l'organe mené associé, caractérisé en ce que lesdits moyens comprennent un galet tendeur (37) porté par un support (38) monté coulissant et oscillant sur une tige de guidage fixe (39) parallèle à l'arbre moteur (10).

2. Dispositif suivant la revendication 1, dans lequel le support (38) est relié à un levier d'actionnement ou de sélection (43) guidé dans des moyens de sélection (45), caractérisé en ce que les moyens de sélection comprennent une grille (45) comportant autant de branches (53, 54, 55) que de courroies (14, 15, 16) avec lesquelles le galet tendeur (37) peut coopérer, cette grille ayant par exemple la forme générale d'un M dont les trois branches verticales (53, 54, 55) correspondent, respectivement, a une position active du galet tendeur.

3. Dispositif suivant la revendication 2, caractérisé en ce que la branche horizontale (56) de ·la grille de sélection comporte une échancrure (57) qui détermine une position neutre du galet tendeur (37).

4. Dispositif suivant l'une quelconque des revendications 1 à 3, caractérisé en ce que le support (38) est sollicité par un ressort de rappel (50) vers sa position correspondant à la venue en prise du galet tendeur (37) avec l'une ou l'autre des courroies.

5. Dispositif suivant l'une quelconque des revendications 1 à 4, caractérisé en ce que, comme connu en soi, le levier de sélection (43) est associé à des moyens de guidage et de blocage (46, 47, 48, 49).

6. Dispositif suivant l'une quelconque des revendications 1 à 5, caractérisé en ce qu'il comprend un arbre intermédiaire fixe (19) parallèle à l'arbre moteur (10) et sur lequel est montée folle au moins une poulie (18, 28) de guidage d'au moins une courroie (14, 16), et/ou au moins un couple de poulies (20, 21) de renvoi du mouvement vers l'un des organes à entraîner.

7. Dispositif suivant la revendication 6, caractérisé en ce qu'un bras (29) de support de l'un des organes à entraîner est monté sur l'arbre intermédiaire (19) de façon à pouvoir être positionné angulairement par rapport à cet arbre.

8. Dispositif suivant la revendication 7, caractérisé en ce que le bras de support (29) est réglé en position angulaire au moyen d'un levier (30), se déplaçant, de préférence dans une fente (51) de la grille de sélection (45).

9. Dispositif suivant l'une quelconque des revendications 7 et 8, caractérisé en ce qu'il est prévu des moyens (32) pour bloquer le bras support (29) par rapport à l'arbre fixe (19).

10. Dispositif suivant l'une quelconque des revendications 1 à 9, caractérisé en ce qu'il est prévu un interrupteur (58) monté dans le circuit d'alimentation du moteur (21) et agencé de façon à couper cette alimentation dès que le galet tendeur quitte l'une de ses positions actives où se trouve débloqué.

11. Machine combinée, notamment machine à bois, comprenant au moins deux outils devant être entraînés sélectivement à partir d'un moteur unique, caractérisée en ce qu'elle comprend un dispositif suivant l'une quelconque des revendications précédentes.

## Patentansprüche

1. Vorrichtung zum selektiven Antreiben von wenigstens zwei getriebenen Einrichtungen ausgehend von einem einzigen Motor, mit wenigstens zwei Treibscheiben (11, 12, 13), die mit einer Antriebswelle (10) drehfest und über Treibriemen (14, 15, 16) mit den einzelnen getriebenen Einrichtungen zugeordneten getriebenen Riemenscheiben (17, 20, 26) verbunden sind, wobei die Treibriemen (14, 15, 16) im freien Zustand eine solche Länge und Spannung haben, daß sie keinen Antrieb der getriebenen Riemenscheiben (17, 20, 26) ausführen, und mit bezüglich der verschiedenen Treibriemen selektiv in mehrere Stellungen, in welchen sie einem ausgewählten Treibriemen eine für die Ausführung des Antreibens der zugehörigen getriebenen Einrichtung ausreichende Spannung verleihen, bringbaren Mitteln (37), dadurch gekennzeichnet, daß die Mittel eine Spannrolle (37) umfassen, die auf einem Träger (38) sitzt, der verschiebbar und schwenkbar auf einer zur Antriebswelle (10) parallen feststehenden Führungsstange (39) angebracht ist.

2. Vorrichtung nach Anspruch 1, bei welcher der Träger (38) mit einem in einer Wähleinrichtung (45) geführten Betätigungs- bzw. Wählhebel (43) verbunden ist, dadurch gekennzeichnet, daß die Wähleinrichtung einen Rost (45) mit so viel Schenkeln (53, 54, 55) wie Treibriemen (14, 15, 16), mit welchen die Spannrolle (37) zusammenwirken kann, umfaßt, wobei der Rost beispielsweise im wesentlichen die Form eines M hat, dessen drei vertikale Schenkel (53, 54, 55) jeweils einer aktiven Stellung der Spannrolle entsprechen.

3. Vorrichtung nach Anspruch 2, dadurch gekennzeichnet, daß der horizontale Schenkel (56) des Wählrostes eine bogenförmige Aussparung (57) aufweist, die eine Neutralstellung der Spannrolle (37) bestimmt.

4. Vorrichtung nach irgendeinem der Ansprüche 1 bis 3, dadurch gekennzeichnet, daß der Träger (38) durch eine Rückholfeder (50) in Richtung seiner Stellung belastet wird, die dem Ineingriffkommen der Spannrolle (37) mit dem einen oder anderen der Treibriemen entspricht.

5. Vorrichtung nach irgendeinem der Ansprüche 1 bis 4, dadurch gekennzeichnet, daß in an sich bekannter Weise der Wählhebel (43) mit Führungs- und Arretiermitteln (46, 47, 48, 49) verbunden ist.

6. Vorrichtung nach irgendeinem der Ansprüche 1 bis 5, dadurch gekennzeichnet, daß sie eine zur Antriebswelle (10) parallele feststehende Zwischenwelle (19) aufweist, auf welcher lose wenigstens eine Führungsscheibe (18, 28) zur Führung wenigstens eines Treibriemens (14, 16) und/oder wenigstens ein Paar von Umführungsscheiben (20, 21) zum Umführen der Bewegung auf eine der anzutreibenden Einrichtungen angebracht ist.

7. Vorrichtung nach Anspruch 6, dadurch gekennzeichnet, daß ein Tragarm (29) einer der anzutreibenden Einrichtungen auf der Zwischenwelle (19) so angebracht ist, daß er winkelmäßig in Bezug auf diese Welle positioniert werden kann.

8. Vorrichtung nach Anspruch 7, dadurch gekennzeichnet, daß der Tragarm (29) in die Winkellage mittels eines Hebels (30) eingestellt wird, der sich vorzugsweise in einem Schlitz (51) des Wählrostes (45) bewegt.

9. Vorrichtung nach irgendeinem der Ansprüche 7 und 8, dadurch gekennzeichnet, daß Mittel (32) zum Arretieren des Tragarms (29) bezüglich der feststehenden Welle (19) vorgesehen sind.

10. Vorrichtung nach irgendeinem der Ansprüche 1 bis 9, dadurch gekennzeichnet, daß ein im Stromkreis des Motors (21) angebrachter und so eingerichteter Schalter (58) vorgesehen ist, daß die Stromversorgung unterbrochen wird, sobald die Spannrolle eine ihrer aktiven Stellungen verläßt oder entriegelt ist.

11. Mehrfunktionelle Maschine, insbesondere Holzbearbeitungsmaschine, mit wenigstens zwei selektiv, ausgehend von einem einzigen Motor anzutreibenden Werkzeugen, dadurch gekennzeichnet, daß sie eine Vorrichtung nach einem der vorstehenden Ansprüche aufweist.

## Claims

1. A selective device for driving at least two driven elements by means of a single motor, of the type comprising at least two drive pulleys (11, 12, 13) connected to rotate with a motor shaft (10) and connected by belts (14, 15, 16) to driven pulleys, respectively associated with each of the driven elements, the belts (14, 15, 16) having in the free state such length and tension that they do not achieve the driving of the driven pulleys (17, 20, 26), and means (37) capable of being selectively brought, relative to the various belts, into a plurality of positions in which they impart to a selected belt sufficient tension for achieving the driving of the associated driven element, characterised in that said means comprise a tension roller (37) carried by a support (38) mounted to be slidable and pivotable on a fixed guide rod (39) parallel to the motor shaft (10).

2. A device according to claim 1, wherein the support (38) is connected to an actuating or selecting lever (43) guided in selection means (45), characterised in that the selection means comprise a grid (45) having as many branches (53, 54, 55) as there are belts (14, 15, 16) with which the tension roller (37) is cooperative, said grid having for example the general shape of an M whose three vertical branches (53, 54, 55) respectively correspond to an operative position of the tension roller.

3. A device according to claim 2, characterised in that the horizontal branch (56) of the selection grid includes a notch (57) which determines a neutral position of the tension roller (37).

4. A device according to any one of the claims 1 to 3, characterised in that the support (38) is biased by a return spring (50) towards its position corresponding to the engagement of the tension roller (37) with either one of the belts.

5. A device according to any one of the claims 1 to 4, characterised in that the selection lever (43) is in the known way associated with guiding and locking means (46, 47, 48, 49).

6. A device according to any one of the claims 1 to 5, characterised in that it comprises a fixed intermediate shaft (19) parallel to the motor shaft (10) and on which is freely rotatively mounted at least one guide pulley (18, 28) of at least one belt (14, 15) and/or at least one couple of counter-motion pulleys (20, 21) directing the motion toward one of the elements to be driven.

7. A device according to claim 6, characterised in that a support arm (29) of one of the elements to be driven is mounted on the intermediate shaft (19) so as to be angularly positionable relative to said shaft.

8. A device according to claim 7, characterised in that the support arm (29) is adjusted in an angular position by means of a lever (30) which moves preferably in a slot (51) in the selection grid (45).

9. A device according to claim 7 or 8, characterised in that means (32) are provided for locking the support arm (29) relative to the fixed shaft (19).

10. A device according to any one of the claims 1 to 9, characterised in that there is provided a switch (58) connected in the supply circuit of the motor (21) and so adapted as to interrupt said supply as soon as the tension roller leaves one of its operative positions or is unlocked.

11. A combined machine, in particular a wood-working machine, comprising at least two tools which must be selectively driven by a single motor, characterised in that it comprises a device according to any one of the preceding claims.

FIG. 1

FIG. 3

0038747

# FIG. 2